(19) Europäisches Patentamt
European Patent Office
Office européen des brevets

(11) **EP 4 517 281 A1**

(12) **EUROPEAN PATENT APPLICATION**
published in accordance with Art. 153(4) EPC

(43) Date of publication:
**05.03.2025 Bulletin 2025/10**

(21) Application number: **23815661.6**

(22) Date of filing: **28.04.2023**

(51) International Patent Classification (IPC):
**G01J 1/02** (2006.01)          **G01J 3/02** (2006.01)
**G01J 3/45** (2006.01)

(52) Cooperative Patent Classification (CPC):
**G01J 1/02; G01J 3/02; G01J 3/45**

(86) International application number:
**PCT/JP2023/016930**

(87) International publication number:
**WO 2023/233900 (07.12.2023 Gazette 2023/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.05.2022 JP 2022087832**

(71) Applicant: **National University Corporation
Tokyo University Of Agriculture and Technology
Fuchu-shi
Tokyo 183-8538 (JP)**

(72) Inventors:
• **ZHANG, Ya
Fuchu-shi, Tokyo 183-8538 (JP)**
• **EBATA, Kazuki
Fuchu-shi, Tokyo 183-8538 (JP)**
• **IIMORI, Mirai
Fuchu-shi, Tokyo 183-8538 (JP)**

(74) Representative: **Hautier IP - MC/EP
17, avenue Albert II
C/Ọ The Office & Co - L'ALBU
98000 Monaco (MC)**

(54) **LIGHT SENSOR, LIGHT DETECTION DEVICE, AND TERAHERTZ/INFRARED FOURIER SPECTROSCOPE**

(57) A light sensor includes a vibration actuator configured to generate vibration on the basis of an input signal, a resonator having a doubly-clamped beam formed in a MEMS structure using a silicon material, configured to vibrate on the basis of the vibration transmitted by the vibration actuator and having a resonant frequency that changes in response to input of light, and a vibration detector configured to detect vibration of the doubly-clamped beam.

FIG. 1

EP 4 517 281 A1

## Description

TECHNICAL FIELD

The present invention relates to a light sensor, a light detection device, and a terahertz/infrared Fourier spectroscope which detect light in a broad band. Priority is claimed on Japanese Patent Application No. 2022-087832, filed May 30, 2022, the content of which is incorporated herein by reference.

BACKGROUND ART

Light sensors are used everywhere in our daily lives, such as in various remote controls, and have become indispensable in our lives. There are two types of light sensors such as a photoelectric effect type and a thermal effect type. Of them, pyroelectric detection devices and bolometers are widely used as the thermal effect types. The bolometer described above includes a light absorber that receives light and a detector that detects a temperature change of the light absorber, light energy received by the light absorber is converted into thermal energy, and a resistance value of a thermistor, which changes in response to a rise in temperature, is detected by the detector.

Incidentally, in order to increase the sensitivity of a conventional bolometer, it is necessary to cool the temperature detection element or to integrate heat for a long period of time. For this reason, it was difficult for the conventional bolometer to simultaneously achieve the performance of "room temperature operation," "high speed," and "high sensitivity." In order to realize the performance of "room temperature operation," "high sensitivity," and "high speed" in a bolometer, it is necessary to use a physical quantity other than the usual resistance value as a signal.

In recent years, research has been conducted into elements called Micro Electro Mechanical Systems (MEMS), which have microstructures formed using semiconductor microfabrication technology and which realize mechanical operations. For example, Patent Document 1 and Non-Patent Document 1 disclose highly sensitive bolometer-type light sensors configured using MEMS.

The light sensors described in Patent Document 1 and Non-Patent Document 1 include a doubly-clamped beam formed using MEMS made of GaAs (gallium arsenide) on the basis of semiconductor microfabrication technology, a vibration actuator that inputs vibration to the doubly-clamped beam, and a vibration detector that detects the vibration of the doubly-clamped beam. These light sensors detect a change in resonant frequency with high sensitivtity due to thermal expansion caused by a temperature change in the beam on the basis of the incidence of light, thereby achieving the performance of "room temperature operation," "high sensitivity," and "high speed."

Moreover, Non-Patent Document 2 describes a light sensor configured of MEMS for detecting infrared lights. The light sensor described in Non-Patent Document 2 has a MEMS structure made up of a paddle held by thin leads, and is configured to detect a torsional mode of the MEMS structure on the basis of a change in resonant frequency caused by the thermal effect of light irradiation from outside.

Furthermore, Non-Patent Document 3 describes a light sensor configured of a silicon-on-insulator (SOI) MEMS that detects terahertz lights. The light sensor of Non-Patent Document 3 employs an SOI cantilever structure, and is configured to drive vibration of the cantilever structure due to a thermal effect of external light irradiation, and to detect a vibration amplitude of the cantilever.

[Citation List]

[Patent Document]

[Patent Document 1]
Japanese Unexamined Patent Application, First Publication No. 2018-146294
[Non-Patent Document 1]
Y. Zhang, S. Hosono, N. Nagai, S.H. Song, and K. Hirakawa, "Fast and sensitive bolometric terahertz detection at room temperature through thermomechanical transduction", Journal of Applied Physics 125, 151602 (2019); https://doi.org/10.1063/1.5045256.
[Non-Patent Document 2]
X. C. Zhang, E. B. Myers, J. E. Sader, and M. L. Roukes, "Nanomechanical Torsional Resonators for Frequency-Shift Infrared Thermal Sensing", Nano Lett. 13, 1528 (2013); https://pubs.acs.org/doi/pdf/10.1021/nl304687p
[Non-Patent Document 3]
Froberger, K., et al. "SOI-based micro-mechanical terahertz detection device operating at room-temperature." arXiv preprint arXiv:2204.03970 (2022). https://arxiv.org/pdf/2204.03970.pdf

[Summary of Invention]

[Technical Problem]

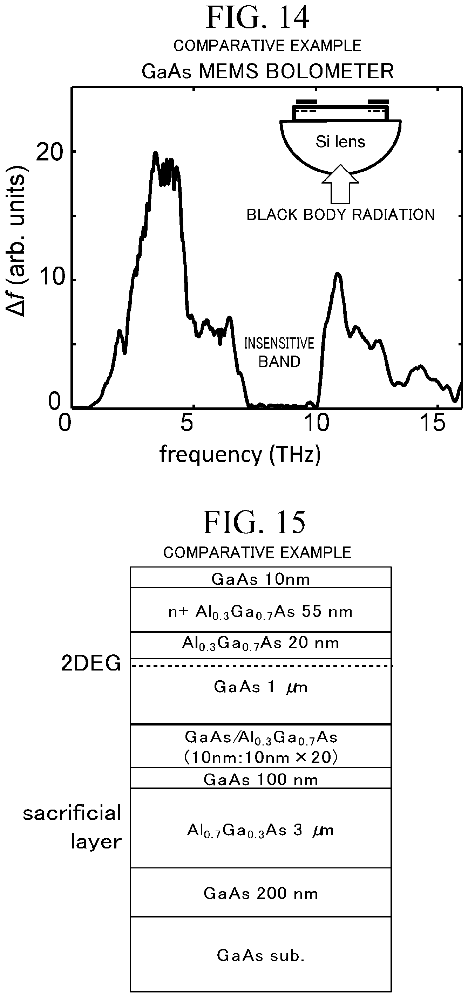

When a light sensor is applied to a spectroscopic system or the like, it is desirable that the sensitivity to a spectrum of incident light does not have an insensitive band. The bolometer type light sensors described in Patent Document 1 and Non-Patent Document 1 are configured of a MEMS formed of a GaAs substrate having polarity. These light sensors have a problem that when input light in a terahertz band or infrared region passes through the GaAs substrate, an insensitive band occurs in which detection sensitivity in the terahertz to infrared regions decreases due to an interaction with phonons in the GaAs crystal (refer to FIG. 14).

In addition, a response speed of a bolometer is determined by a thermal time constant. When a thermal conductivity is small, the thermal time constant becomes large, and the response speed of the sensor decreases. In general, when a bolometer is formed in a small size, the thermal time constant of the element is reduced, and the speed can be increased. However, GaAs materials have a low thermal conductivity, and when they are formed to have a large light absorption area, the size of the element increases and the response speed deteriorates.

Furthermore, a GaAs MEMS-based bolometer requires growing a multi-layer GaAs/AlGaAs hetero-structure substrate (refer to FIG. 15). The technology for growing a GaAs/AlGaAs hetero-structure is complex, difficult to control, and expensive, which makes large-scale manufacturing and application of MEMS bolometers difficult.

The present invention has been made in consideration of the above-described problems, and an object thereof is to provide a light sensor, a light detection device, and a terahertz/infrared Fourier spectroscope that can detect light in a broad wavelength band including visible light, infrared light, and terahertz waves with high sensitivity.

[Solution to Problem]

An aspect of the present invention is a light sensor including a vibration actuator configured to generate vibration on the basis of an input signal, a resonator having a doubly-clamped beam formed in a MEMS structure using a silicon material, configured to vibrate on the basis of the vibration transmitted by the vibration actuator and having a resonant frequency that changes in response to input of light, and a vibration detector configured to detect vibration of the doubly-clamped beam.

[Advantageous Effects of Invention]

According to the present invention, light in a broad wavelength band including visible light, infrared light, and terahertz waves can be detected with high sensitivity.

[Brief Description of Drawings]

[FIG. 1] is a diagram showing a configuration of a broadband light detection device according to an embodiment of the present invention.
[FIG. 2] A perspective view showing a configuration of a light sensor.
[FIG. 3] A diagram showing transmission spectra of a high-resistivity SOI and GaAs.
[FIG. 4] A diagram showing measurement results of a resonance spectrum of the light sensor.
[FIG. 5] A diagram showing a change in the resonance spectrum when heat is input to the light sensor.
[FIG. 6] A diagram showing a function corresponding to input thermal power of a resonant frequency shift of the optical sensor.
[FIG. 7] A diagram showing a change in the resonance frequency when visible light of 530 nm is input to the light sensor.
[FIG. 8] A diagram showing a change in the resonant frequency when infrared light of 1.5 $\mu$m is input to the light sensor.
[FIG. 9] A diagram showing a change in the resonant frequency when a terahertz wave of 0.3 THz is input to the light sensor.
[FIG. 10] A diagram showing a change in the resonant frequency when light of 0 to 5 THz is input to the light sensor.
[FIG. 11] A diagram showing a change in the resonant frequency when light of 0 to 20 THz is input to the light sensor.
[FIG. 12] A diagram showing measurement results of a frequency shift when a modulation frequency is changed.
[FIG. 13] A diagram showing performance of the light sensor and a conventional sensor.
[FIG. 14] A diagram showing performance of a conventional light sensor having a MEMS structure formed from GaAs.
[FIG. 15] A diagram showing a configuration of a substrate having a conventional multi-layer GaAs/AlGaAs

heterostructure.

[FIG. 16] A diagram showing a configuration of a terahertz/infrared Fourier spectroscope to which the light sensor is applied.

[Description of Embodiments]

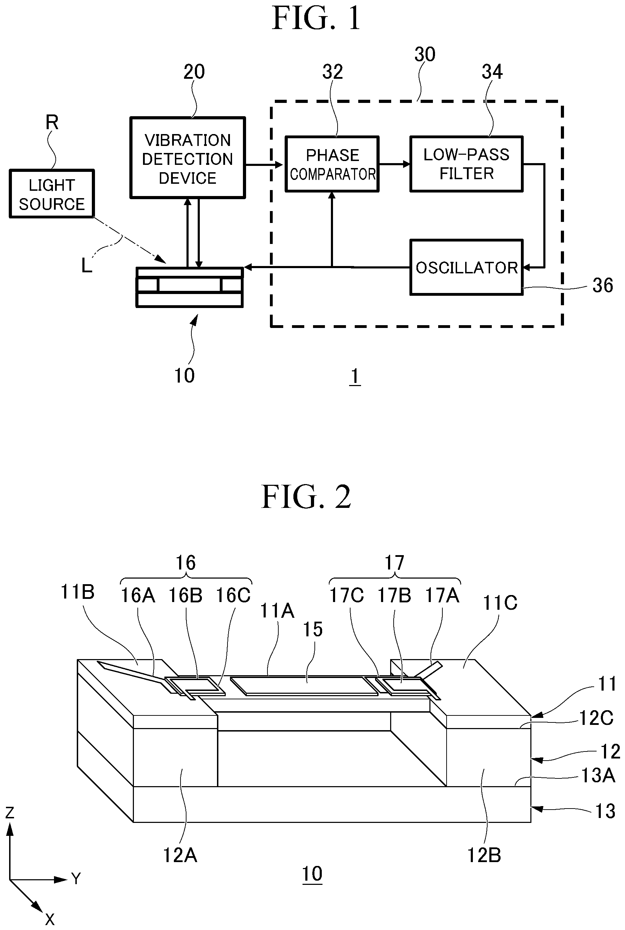

As shown in FIG. 1 and FIG. 2, a broadband light detection device 1 includes a light sensor 10 that vibrates on the basis of input light L input from a light source R, a vibration detection device 20 that detects vibration of the light sensor 10, and a phase synchronizer 30 that detects and adjusts a frequency of the vibration of the light sensor 10 on the basis of a detection value of the vibration detection device 20. The light source R may be any light source. For example, the input light L from the light source R may be natural light, solid-state light such as laser light or LED light, transmitted light that has passed through a sample, reflected light from an object, light emitted from a sample, or the like, but is not limited thereto. A wavelength of the input light L is not particularly limited as long as it is within a wavelength range detectable by the light sensor 10, such as visible light, infrared light, or terahertz waves. The light source R does not have to be a component of the broadband light detection device 1.

The light sensor 10 is formed in an optical element having, for example, a MEMS structure. In the following description, in a layer thickness direction of the light sensor 10 (a Z-axis direction in the drawing), a +Z orientation will be referred to as the upper surface side, and a -Z orientation will be referred to as the lower surface side, and the like. The above-described orientations are defined for the sake of convenience and do not necessarily indicate directions in a manner in which the light sensor 10 is used.

The light sensor 10 includes a substrate 13 formed in a plate shape, a resonator 11 formed on the substrate 13, and a sacrificial layer 12 for isolating the resonator 11 from the substrate 13. The light sensor 10 is configured, for example, of a high-resistivity silicon-on-insulator (SOI) wafer made of a silicon material (Si) used in semiconductor elements.

The sacrificial layer 12 is formed of a silicon oxide film ($SiO_2$). The sacrificial layer 12 is formed into a pair of first and second legs 12A and 12B so as to support the resonator 11. The pair of first leg 12A and second leg 12B are formed to have a rectangular cross section in a plan view. The resonator 11 formed in a plate shape is provided on the upper surface 12C side of the sacrificial layer 12. The resonator 11 is made of a silicon (Si) material. The resonator 11 has a doubly-clamped beam 11A formed in a flat plate shape that extends so as to bridge a pair of sacrificial layers 12. The first support 11B supported by the first leg 12A is provided to be connected to one end side of the doubly-clamped beam 11A. The second support 11C supported by the second leg 12B is provided to be connected to the other end side of the doubly-clamped beam 11A. The doubly-clamped beam 11A vibrates on the basis of vibration transmitted by a vibration actuator 16 which will be described below.

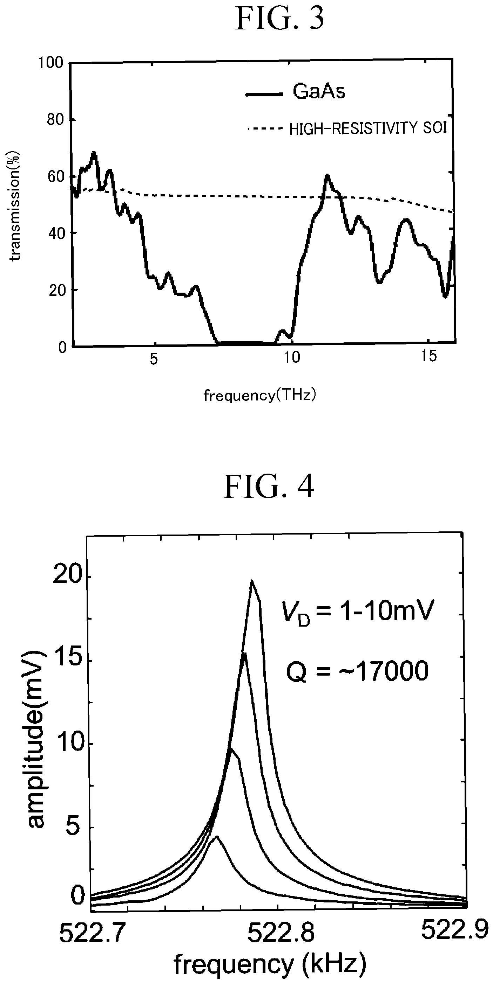

The high-resistivity SOI used in the light sensor 10 is, for example, p-type with a (100) crystal plane orientation and a resistivity of more than 1000 ohm*cm, and has a stable transmission spectrum in a wide frequency band (refer to FIG. 3). Therefore, the light sensor 10 formed of an SOI can perform stable, highly sensitive light measurement in a broad band. The light sensor 10 made of an SOI has a higher thermal conductivity than a conventional light sensor made of GaAs, and can realize a high-speed bolometer.

The doubly-clamped beam 11A may be used as it is if it can absorb a wavelength band of light to be measured. In order to achieve a constant absorption rate in a broad wavelength band, it is preferable to provide a light absorber 15 formed in a rectangular thin film shape, and the light absorber 15 can be appropriately selected from a metal film, an absorbing film with a high absorption rate using a metasurface plasmon structure, a doped film in which impurities are introduced onto a surface of the doubly-clamped beam 11A and a sheet resistance is matched to a vacuum electromagnetic wave resistance, and the like. When the light absorber 15 is formed of a metal film, the metal film can be formed by vapor deposition of nickel or a nickel-chromium (NiCr) alloy. The light absorber 15 increases in temperature in response to input of light, and transmits the temperature to the doubly-clamped beam 11A. An impedance of the light absorber 15 matches an impedance of the input light or electromagnetic wave, converts the incident light into heat and transmits it to the doubly-clamped beam 11A. The light absorber 15 transmits temperature to the doubly-clamped beam 11A to expand the doubly-clamped beam 11A and thus changes a resonant frequency. The light absorber 15 may be provided at any position as long as it can expand the doubly-clamped beam 11A and can change the resonance frequency, but it is preferable to provide it at the center of the doubly-clamped beam 11A. The vibration actuator 16 that inputs vibration to the doubly-clamped beam 11A is formed on an upper surface of the first support 11B. A vibration detector 17 that detects vibration of the doubly-clamped beam 11A is formed on an upper surface of the second support 11C.

The vibration actuator 16 is configured of, for example, a pair of electrodes 16A and 16B. The pair of electrodes 16A and 16B are formed by being laminated in the layer thickness direction on the upper surface side of the doubly-clamped beam 11A, and are provided at one end in a longitudinal direction of the doubly-clamped beam 11A, that is, on the first support 11B side in FIG. 2. An insulating layer 16C made of a piezoelectric material is formed between the pair of electrodes 16A and 16B. The vibration actuator 16 is configured of a piezoelectric element that generates an electrostatic force between a pair of electrodes 16A and 16B on the basis of a voltage input so as to generate a potential difference between the pair of electrodes 16A and 16B and deforms the insulating layer 16C. The vibration actuator 16 generates vibration on the basis of an input signal output from a oscillator 36 which will be described below. The vibration actuator 16 vibrates when an input signal on the basis of a voltage of a predetermined frequency generated by the oscillator 36 is input to the pair of electrodes 16A and 16B. The vibration actuator 16 can transmit the generated vibration to the doubly-clamped beam 11A, thereby vibrating the doubly-clamped beam 11A.

The vibration actuator 16 may be configured of an electrostatic element, other than a piezoelectric element, which applies a potential difference between the doubly-clamped beam 11A and the substrate 13 and inputs vibration to the doubly-clamped beam 11A on the basis of an electrostatic effect. Alternatively, the vibration actuator 16 may be configured of an electromagnetic actuator in which electrodes are provided on the doubly-clamped beam 11A and vibration is input to the doubly-clamped beam 11A on the basis of a Lorentz force generated when a current flows through the electrodes in a magnetic field generated around the doubly-clamped beam 11A. The electromagnetic actuator may be configured to pass an AC current through the electrodes in a DC magnetic field, or may be configured to pass a DC current through the electrodes in an AC magnetic field.

The vibration detector 17 is formed of, for example, a pair of electrodes 17A and 17B. The vibration detector 17 has a similar configuration to the vibration actuator 16. The pair of electrodes 17A and 17B are formed by being laminated in the layer thickness direction on the upper surface side of the doubly-clamped beam 11A, and are provided at the other end of the doubly-clamped beam 11A in the longitudinal direction, that is, on the support 11C side in FIG. 2. An insulating layer 17C made of a piezoelectric material is formed between the pair of electrodes 17A and 17B. The vibration detector 17 is configured of the pair of electrodes 17A and 17B. The vibration detector 17 is formed of a piezoelectric element that generates a potential difference between the pair of electrodes 17A and 17B when the insulating layer 17C is deformed. The insulating layer 17C is deformed on the basis of vibration of a predetermined frequency generated in the doubly-clamped beam 11A, and the vibration detector 17 outputs an output signal based on a voltage of a predetermined frequency on the basis of the deformation of the insulating layer 17C.

The vibration detector 17 may be formed of a piezoresistive element that detects resistance that changes according to stress generated on the basis of the vibration of the doubly-clamped beam 11A, other than the piezoelectric element. The vibration detector 17 may be a laser Doppler vibrometer that receives reflected light of a laser beam irradiated on the doubly-clamped beam 11A and detects vibration of the doubly-clamped beam 11A on the basis of the Doppler effect.

The vibration detection device 20 amplifies the signal output from the vibration detector 17, and outputs an electrical signal to the phase synchronizer 30. The phase synchronizer 30 is configured as a general phase synchronization circuit. The phase synchronizer 30 includes, for example, a phase comparator 32 to which an output value of the detection signal output from the vibration detection device 20 is input, a low-pass filter 34 connected downstream of the phase comparator 32, and the oscillator 36 connected downstream of the low-pass filter 34 and connected to the phase comparator 32 and the vibration actuator 16.

The phase comparator 32 compares a phase of the detection signal output from the vibration detection device 20 with that of a reference signal, and outputs a signal indicating a phase difference. The low-pass filter 34 receives the signal output from the phase comparator 32, and outputs an output signal obtained by cutting off high frequencies from the signal. The oscillator 36 outputs a signal of which a frequency is changed in such a direction that the signal from the low-pass filter 34 is cancelled out. The signal output from the oscillator 36 is input to the vibration actuator 16 of the light sensor 10 as an input signal, and is also input to the phase comparator 32 as a reference signal. The signal output from the oscillator 36 is input to the vibration actuator 16 as an input signal having the resonance frequency of the doubly-clamped beam 11A of the light sensor 10. The vibration actuator 16 generates vibration on the basis of the input signal and causes the doubly-clamped beam 11A to vibrate.

Next, a description will be given of an operation of the broadband light detection device 1. When no light is input to the light sensor 10, the doubly-clamped beam 11A vibrates at a natural resonant frequency. An initial value $\omega_0 = f_0/2\pi$ of an angular frequency corresponding to a resonance frequency $f_0$ is given by the following Equation (1).

[Math. 1]

$$\omega_0 = \frac{t}{L^2}\sqrt{\frac{E}{12\rho}}\mu_n^2 \qquad (1)$$

Here, E is a Young's modulus of the doubly-clamped beam 11A, $\rho$ is a density, $\mu_n$ is a constant according to a mode, L is a span length of the doubly-clamped beam 11A, and t is a thickness of the doubly-clamped beam 11A. When the light sensor 10 is irradiated with light from the light source R, the light irradiated to the doubly-clamped beam 11A is converted into heat in the light absorber 15. The heat generated in the light absorber 15 is transferred to the doubly-clamped beam 11A. When a temperature of the doubly-clamped beam 11A increases, the doubly-clamped beam 11A thermally expands. Since one end side of the doubly-clamped beam 11A is restrained by the first support 11B and the other end side is restrained by the second support 11C, the doubly-clamped beam 11A is compressed in the longitudinal direction in accordance to thermal expansion, and stress σ is generated inside the beam. The angular frequency $\omega_0(\sigma)$ $=f_0/2\pi$ that corresponds to the resonance frequency $f_0$ of the doubly-clamped beam 11A under stress σ is indicated by the following Equation (2).

[Math. 2]

$$\omega_0(\sigma) \approx \omega_0(0)\left\{1 + \frac{6}{\mu_n^2}\frac{1}{E}\left(\frac{L}{t}\right)^2\sigma\right\} \qquad (2)$$

As shown in Equation (2), the angular frequency $\omega_0(\sigma)$ corresponding to the resonance frequency $f_0$ changes linearly with an increase in the thermal stress $\sigma(<0)$. Here, when the resonance frequency of the doubly-clamped beam 11A is detected on the basis of the light sensor 10, electric power of the input light can be calculated. When the resonant frequency of the doubly-clamped beam 11A to which light is input changes, the phase synchronizer 30 adjust the frequency so that a signal having the changed resonant frequency is output from the oscillator 36. The resonance frequency of the doubly-clamped beam 11A can be obtained by observing the signal output from the oscillator 36. Therefore, according to the broadband light detection device 1, the resonant frequency of the doubly-clamped beam 11A is shifted on the basis of the light input to the light sensor 10, and thus the input of light can be detected.

In order to detect small changes in the resonance frequency $f_0$ on the basis of the light sensor 10, it is desirable that mechanical resonance in the doubly-clamped beam 11A has a quality factor (a Q-factor) that represents a state of vibration as high as possible. When $k_B$ is a Boltzmann constant, T is a temperature, $f_0$ is a resonant frequency, k is a spring constant of the doubly-clamped beam 11A, Q is the Q-factor, and A is an amplitude, the relationship between a frequency noise density $n_f$ and the Q-factor is indicated by the following Equation (3).

[Math. 3]

$$n_f = \sqrt{\frac{k_B T f_0}{\pi k Q A^2}} \qquad (3)$$

FIG. 4 shows measurement results of a resonance spectrum of the light sensor 10 measured on the basis of the broadband light detection device 1. According to the measurement results, the Q-factor of the light sensor 10 was about 17,000. The light sensor 10 exhibits a value more than twice as high as that of a conventional MEMS light sensor formed from GaAs. Therefore, the light sensor 10 is capable of measuring the frequency of light with lower noise and greater precision than in the conventional MEMS light sensor formed from GaAs.

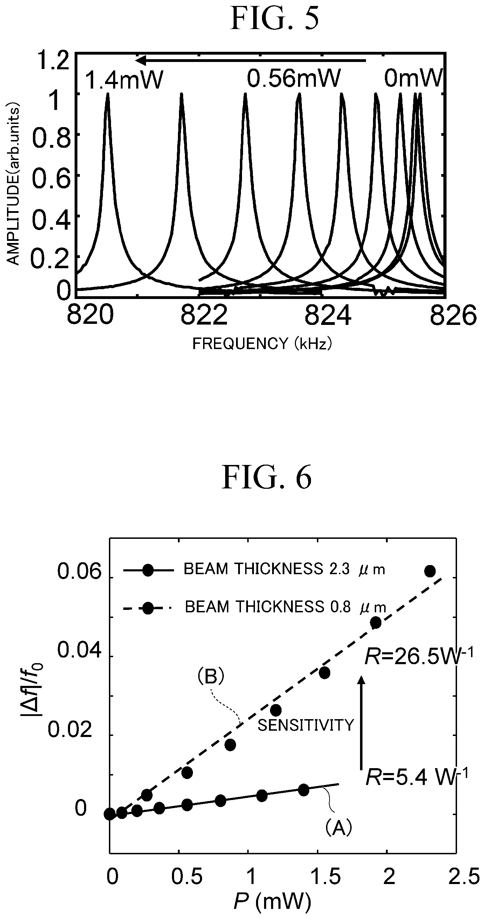

FIG. 5 shows a change in the oscillation spectrum when heat is input to the light sensor 10. As shown in the drawing, the light sensor 10 generates thermal stress on the basis of the input of light and becomes soft, and thus the resonance frequency decreases. FIG. 6 shows a resonant frequency shift of the optical sensor 10 as a function of the input thermal electric power. In the drawing, (A) shows the measurement results using the doubly-clamped beam 11A formed with dimensions of 100 μm×30 μm×2.5 μm. As shown in FIG. 5, the frequency shift increases linearly with increasing heat power, and the normalized thermal response of this sample is expressed by the following Equation (4).

[Math. 4]

$$\text{R} = \frac{\Delta f}{f_0 P} = \sim 5.4 W^{-1} \qquad (4)$$

Such thermal response can be increased by forming the doubly-clamped beam 11A to be thinner or by forming it to have a longer length. In FIG. 6B, (B) shows the measurement results when the doubly-clamped beam 11A having a thickness of 0.8 μm is used. As shown in the drawing, (B) shows a frequency shift compared to (A), and the thermal response R is increased to about 26.5 W^{-1}. This measurement result is close to the thermal response of a light sensor formed from GaAs.

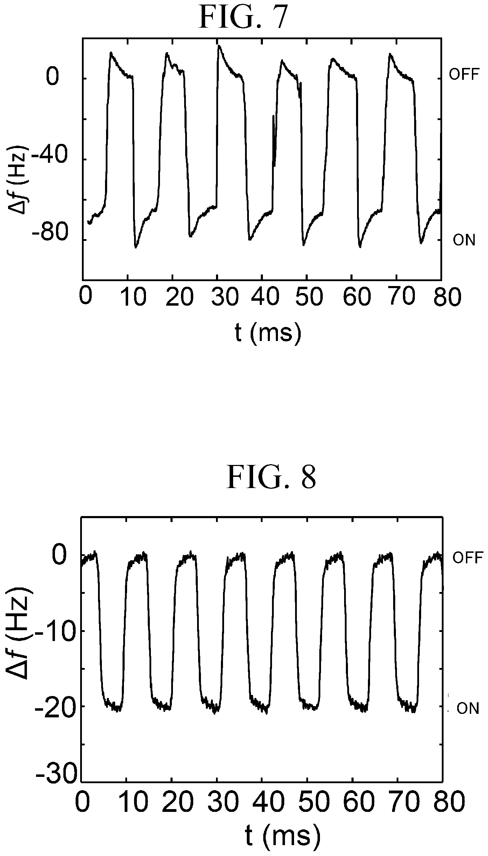

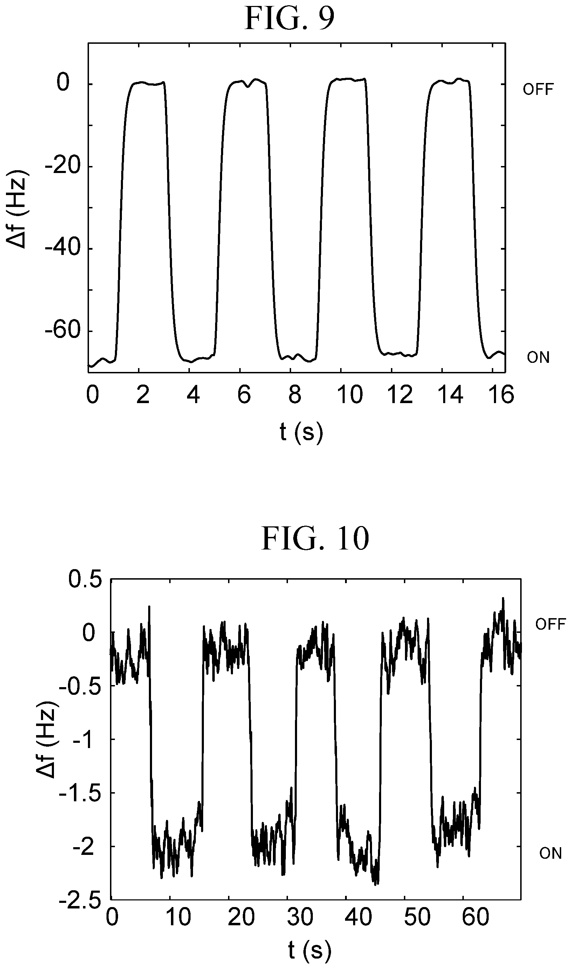

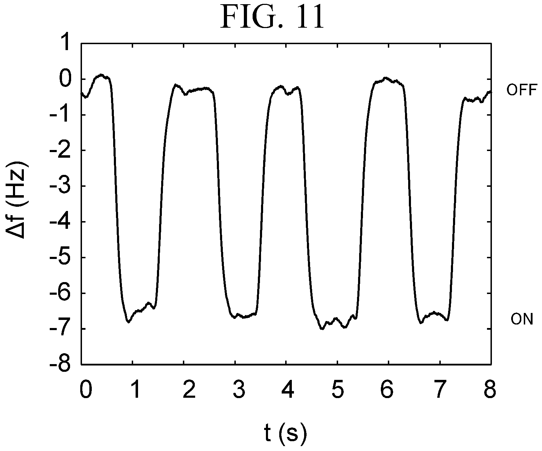

FIG. 7 shows a change in the resonant frequency when visible light of 530 nm is input to the light sensor 10. FIG. 8 shows a change in the resonant frequency when infrared light of 1.5 μm is input to the light sensor 10. FIG. 9 shows a change in the resonant frequency when a terahertz wave of 0.3 THz is input to the light sensor 10 by a terahertz wave multiplier. FIG. 10 shows a change in the resonant frequency when light from a thermal light source (a light bulb) is input to the light sensor 10 via a far-infrared pass filter (having a cut frequency of 5 THz) (that is, the input light is light of 0 to 5 THz). FIG. 11 shows a change in resonant frequency when light from a thermal light source (a light bulb) is input to the light sensor 10 via a far-infrared pass filter (having a cut frequency of 20 THz) (that is, the input light is light of 0 to 20 THz). As shown in the drawings, the light sensor 10 can detect a resonant frequency that changes on the basis of the input of light. It can be understood that the light sensor 10 has sensitivity to light in the spectral bands of visible light and infrared light.

The light sensor 10 can detect light in a predetermined spectral band at high speed. A photothermal response speed of the light sensor 10 is determined on the basis of a thermal time constant thereof. When specific heat of silicon is c and thermal conductivity is $\kappa$, the thermal time constant of the light sensor 10 is indicated by the following Equation (5).
[Math. 5]

$$\tau = \frac{C_T}{G_T} = \frac{c\rho LWt}{4kWt/L} = \frac{c\rho L^2}{4k} \qquad (5)$$

Since the response speed of the light sensor 10 is $1/\tau$, as $\tau$ becomes smaller, the response of the light sensor 10 is faster. To demonstrate the high speed response speed of the light sensor 10, a modulation frequency of the input light was modulated and the shift in the resonant frequency was measured.

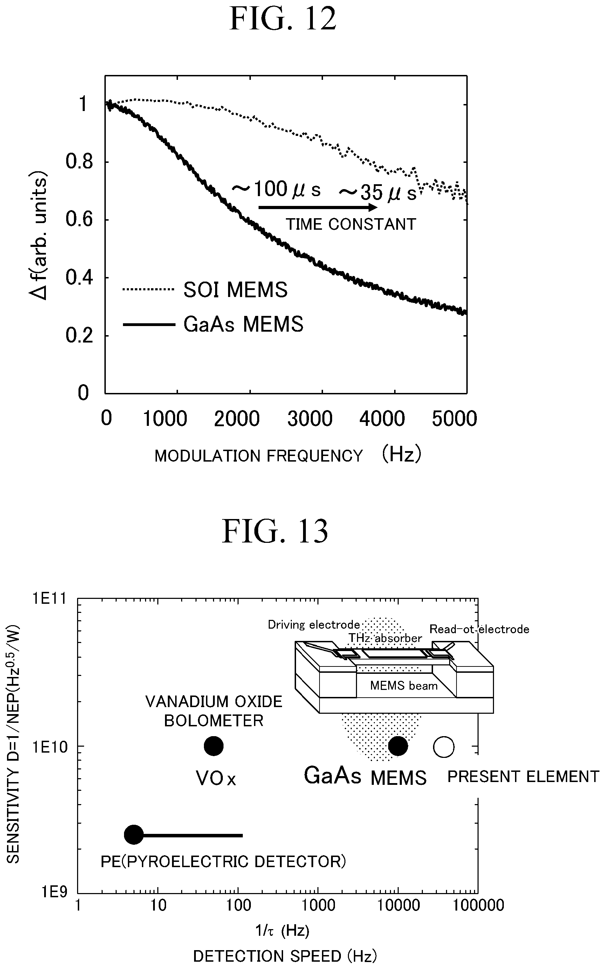

FIG. 12 shows measurement results of the frequency shift $\Delta f$ when the modulation frequency is changed. As shown in the drawing, when comparing the light sensor 10 with a conventional light sensor of the same size made from GaAs, the thermal time constant of the light sensor 10 was approximately 35 $\mu$s, while the thermal time constant of the conventional light sensor made from GaAs was approximately 100 $\mu$s. As shown by the measurement results, when comparing the light sensor 10 with a conventional light sensor formed in the same shape from GaAs, it can be understood that the thermal response of the light sensor 10 is approximately three times faster than the thermal response of the conventional light sensor formed from GaAs.

As shown in FIG. 13, the light sensor 10 has a detection speed (Hz) that is 100 to 1000 times faster than conventional thermal sensors that utilize a change in resistance or capacitance, while having the same sensitivity. According to the broadband light detection device 1, the light sensor 10 has a MEMS structure formed of an SOI material with high resisivity, and a bolometer having high light transmittance can be realized with low cost. According to the broadband light detection device 1, a high-performance bolometer that operates at room temperature on the basis of the light sensor 10 and has a broadband, high sensitivity, high speed, and low cost can be realized.

According to the light sensor 10, since it is formed of an SOI substrate, it has high transmittance in a broad spectral bands and can measure light ranging from visible light to infrared light and terahertz waves, making it possible to realize a high-speed, highly sensitive sensor that operates at room temperature. According to the light sensor 10, since an SOI substrate structure that is less expensive than a GaAs heterostructure that requires a complicated growth process is used, MEMS bolometers can be mass-produced at low cost. The light sensor 10 can be easily mass-produced since it uses common silicon semiconductor technology.

The light sensor 10 has high sensitivity to light in a broad spectral band from visible light to infrared light and terahertz waves, and has a detection speed that is approximately three times faster than a conventional MEMS light sensor formed in the same shape from GaAs. According to the light sensor 10, since it is formed of a silicon-based material, the growth process can be simplified and it can be formed at low cost. According to the broadband light detection device 1 to which the light sensor 10 is applied, it is possible to realize a broadband, high-speed, and highly sensitive light detection device, spectroscopic device, and biological imaging device without any insensitive band in the terahertz to infrared region in which detection sensitivity decreases.

When it is attempted to form a doubly-clamped beam resonator type light sensor using silicon-based materials, there was a problem in that internal stress of the beam structure deposited by a physical film deposition method was large. However, the inventors have discovered that the above-described problem of the internal stress can be solved by employing a MEMS structure formed of a crystalline SOI material (for example, a single crystal SOI substrate) with small internal stress. In this way, when a MEMS doubly-clamped beam structure formed of an SOI material is used, the performance of the light sensor can be further improved. For example, since the example described in the above-described Non-Patent Document 2 employs a physically deposited a-Si film, the internal stress of the MEMS structure is relatively large. Therefore, only a torsional mode which has insufficient temperature sensitivity can be used. Compared to the example described in Non-Patent Document 2, the temperature sensitivity of the above light sensor 10 is about 20 times higher. Non-Patent Document 3 describes the example in which an SOI substrate is used, but this does not take into consideration the internal stress of the beam structure described above. The example described in Non-Patent Document 3 employs a cantilever structure, and thus initial stress inside the structure is irrelevant. In addition, Non-Patent Document 3 does not describe crystallinity of a material. Furthermore, in the example described in Non-Patent Document 3, since the cantilever structure is adopted, the thermal sensitivity is about 10 nW/Hz$^{0.5}$, the above-described light sensor 10 is more than 10 times better than the example described in Non-Paten Document 3.

The broadband light detection device 1 to which the light sensor 10 is applied can be applied to industrial fields that utilize the near-infrared, infrared, and terahertz frequency bands. The broadband light detection device 1 to which the light sensor 10 is applied can realize a terahertz/infrared Fourier spectroscope (FTIR) which is an essential device in the fields of materials/chemistry, pharmaceuticals, biotechnology, and the like. The following describes an FTIR to which the light sensor 10 is applied. In the following description, the same names and symbols are used for the same configurations as those in the above embodiment, and duplicate descriptions will be omitted as appropriate.

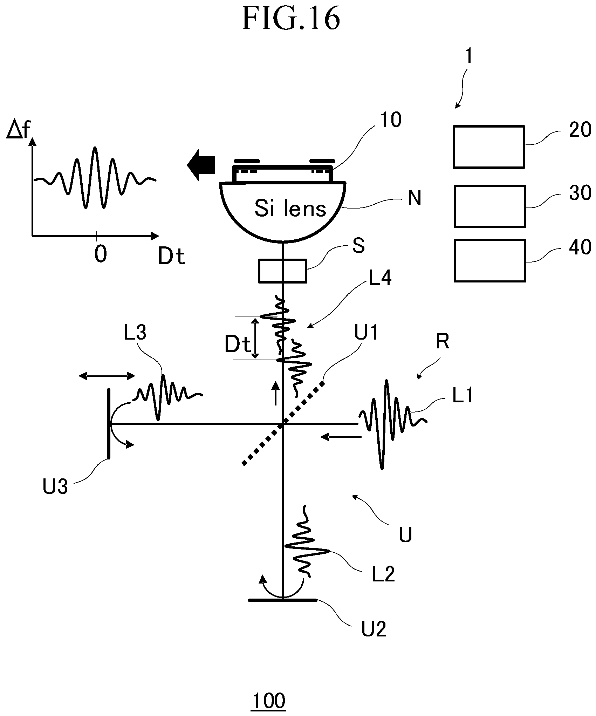

As shown in FIG. 16, the FTIR 100 includes a broadband light detection device 1 having a light sensor 10, a lens N, a light source R, an interference light generator U that generates interference light, and an arithmetic device 40 that analyzes the light detected by the broadband light detection device 1. The FTIR 100 is configured to be a spectroscopic device that measures an interference waveform of light using an interferometer and measures an intensity distribution of a spectrum of light by subjecting the measured value to Fourier transformation. When the FTIR 100 is used, a sample S is set in the broadband light detection device 1, and the FTIR 100 can examine optical characteristics of the sample S. In FIG. 16, the sample S is disposed between a semi-transparent mirror U1 and the lens N of the interference light generator U, but is not limited to this placement and may be disposed at any position at which spectroscopic measurement is possible. The lens N is made of silicon, has a lens shape, collects the input light, and inputs it to the light sensor 10. The arithmetic device 40 analyzes the spectrum of the light input to the light sensor 10 and outputs it. The arithmetic device 40 is, for example, an information processing terminal device configured of a personal computer or the like.

The interference light generator U is, for example, a Michelson interferometer, and includes the semi-transparent mirror U1, a first reflecting mirror U2 formed on a fixed mirror, and a second reflecting mirror U3 formed on a freely movable mirror. The semi-transparent mirror U1 receives light L1 from the light source R in an oblique direction and splits it into two light beams including a first light L2 that is reflected light and a second light L3 that is transmitted light. The first light L2 is reflected by the first reflecting mirror U2 and returns to the semi-transparent mirror U1. The second light L3 is reflected by the second reflecting mirror U3 and returns to the semi-transparent mirror U1.

The first light L2 and the second light L3 are combined in the semi-transparent mirror U1. The second reflecting mirror U3 is movable in an optical path direction, and an optical path difference occurs between an optical path length of the second light L3 and an optical path length of the first light L2. Therefore, a phase difference occurs between the first light L2 and the second light L3 at the semi-transparent mirror U1, and interference light L4 occurs at the semi-transparent mirror U1. The interference light L4 generated at the semi-transparent mirror U1 is collected in the lens N formed of a silicon lens, and is input to the light sensor 10. The interference light L4 input to the light sensor 10 heats up the doubly-clamped beam 11A, and the vibration of the MEMS beam is excited by the vibration actuator and detected by the vibration detection device 20. The resonance frequency of the doubly-clamped beam 11A changes on the basis of the interference light L4. The phase synchronizer 30 detects a frequency of vibration of the light sensor 10. A detection value detected by the phase synchronizer 30 is input to the arithmetic device 40. The arithmetic device 40 analyzes the spectrum of the light L1 on the basis of the detection value detected by the phase synchronizer 30. The arithmetic device 40 performs a Fourier analysis on the interference waveform of the interference light L4 at the detection value, and performs a spectrum analysis of the light L1 output from the light source R. The arithmetic device 40 outputs the spectrum of the light L1 for each wavelength component.

Since the modulation frequency of the light due to the movement of the second reflecting mirror U3 is proportional to a frequency of the light and a moving speed of the second reflecting mirror U3, a scanning speed of the FTIR 100 depends on a detection speed of the light sensor. A light intensity modulation frequency of the FTIR 100 is calculated by $fm=2*f/c*v$, wherein f is the frequency of light, c is the speed of light, and v is the speed of the moving mirror. For example, when the light is infrared light of 10 $\mu$m (having a frequency 30 THz) and the speed of the moving mirror is 10 mm/s, the modulation frequency of the light is 2 kHz.

According to the FTIR 100 to which the light sensor 10 is applied, the detection speed is about 100 to 1000 times faster than that of a pyroelectric detector device used in the conventional FTIR, and the spectrum distribution of light can be measured at high speed and with high sensitivity. The FTIR 100 can realize a multi-channel spectroscope that analyzes the spectrum distribution of light in the near-infrared, infrared, and terahertz frequency bands at high speed and with high sensitivity. Furthermore, the interference light generator U may be replaced with another interferometer other than the Michelson interferometer as long as it generates interference light. Further, the light sensor 10 in the FTIR 100 may be formed in an array. By integrating a circuit of the vibration detector, it is possible to realize an imaging element of thermography that can detect near infrared, infrared, and terhertz light waves at high speed, which is applicable to night time driving assistance devices or the like.

The above-described arithmetic device 40 is realized by, for example, a hardware processor such as a central processing unit (CPU) executing a program (software). Some of all of these components may be realized by hardware (including a circuitry) such as a large scale integration (LSI), an application specific integrated circuit (ASIC), a field-programmable gate array (FPGA), or a graphics processing unit (GPU), and may be realized by a combination of software and hardware. The program may be stored in advance in a storage device such as a hard disk drive (HDD) or a flash memory provided in the arithmetic device 40, or may be stored on a removable storage medium such as a DVD or a CD-ROM and then may be installed by inserting the storage medium into a drive device.

The embodiment for carrying out the present invention has been described above, but the present invention is not limited to such an embodiment, and various modifications and substitutions can be made within the scope that does not deviate from the gist of the present invention. The configurations described in the above embodiment may be substituted for each other.

[Reference Signs List]

10 Light sensor
11 Resonator
11A Doubly-clamped beam
15 Light absorber
16 Vibration actuator
17 Vibration detector
20 vibration detection device
30 Phase synchronizer
36 oscillator
40 Arithmetic device
L Input light
L1 Light
R Light source

**Claims**

1.  A light sensor comprising:

    a vibration actuator configured to generate vibration on the basis of an input signal;
    a resonator having a doubly-clamped beam, the doubly-clamped beam being formed in a MEMS structure using a silicon material, being configured to vibrate on the basis of the vibration transmitted by the vibration actuator, and having a resonant frequency that changes in response to input of light; and
    a vibration detector configured to detect vibration of the doubly-clamped beam.

2.  The light sensor according to claim 1, wherein the MEMS structure is formed of a silicon-on-insulator (SOI) material.

3.  The light sensor according to claim 1 or 2, wherein the doubly-clamped beam is provided between the vibration actuator and the vibration detector, and has a light absorber to which temperature is transferred in response to input of light.

4.  The light sensor according to claim 3, wherein the vibration actuator is formed of a piezoelectric element provided on one end side of the doubly-clamped beam in a longitudinal direction.

5.  The light sensor according to claim 3, wherein the vibration actuator is formed of an electrostatic element provided on one end side of the doubly-clamped beam in a longitudinal direction.

6.  The light sensor according to claim 3, wherein the vibration detector is formed of a piezoelectric element provided on the other end side of the doubly-clamped beam in a longitudinal direction.

7.  The light sensor according to claim 3, wherein the vibration detector is formed of a piezoresistive element provided on the other end side of the doubly-clamped beam in a longitudinal direction.

8.  The light sensor according to claim 3, wherein the MEMS structure includes a substrate formed in a flat plate shape, a pair of sacrificial layers formed on the substrate, and the resonator having the doubly-clamped beam which is formed of a silicon material and is formed in a flat plate shape so as to bridge the pair of sacrificial layers.

9. A light detection device comprising:

a light sensor including:

a vibration actuator configured to generate vibration on the basis of an input signal,
a resonator having a doubly-clamped beam, the doubly-clamped beam being formed in a MEMS structure using a silicon material, being configured to vibrate on the basis of the vibration transmitted by the vibration actuator, and having a resonant frequency that changes in response to input of light, and
a vibration detector configured to detect vibration of the doubly-clamped beam;

a vibration detection device configured to amplify and output vibration of the light sensor; and
a phase synchronizer configured to detect a frequency of the vibration of the light sensor on the basis of an output value of the vibration detection device.

10. The light detection device according to claim 9, wherein the MEMS structure is formed of an SOI material.

11. A terahertz/infrared Fourier spectroscope comprising:

a light sensor including:

a vibration actuator configured to generate vibration on the basis of an input signal,
a resonator having a doubly-clamped beam, the doubly-clamped beam being formed in a MEMS structure using a silicon material, being configured to vibrate on the basis of the vibration transmitted by the vibration actuator, and having a resonant frequency that changes in response to input of light,
a light absorber configured to transmit temperature to the doubly-clamped beam in response to input of light, and
a vibration detector configured to detect vibration of the doubly-clamped beam;

a light source configured to input input light to the light sensor;
a vibration detection device configured to amplify and output vibration of the light sensor;
a phase synchronizer configured to detect a frequency of the vibration of the light sensor on the basis of an output value of the vibration detection device; and
an arithmetic device configured to analyze a spectrum of the light on the basis of a detection value detected by the phase synchronizer.

12. The terahertz/infrared Fourier spectroscope according to claim 11, wherein the MEMS structure is formed of an SOI material.

# FIG. 1

# FIG. 2

## FIG. 3

## FIG. 4

## FIG. 5

## FIG. 6

## FIG. 7

## FIG. 8

## FIG. 9

## FIG. 10

FIG. 11

# FIG. 12

# FIG. 13

# FIG. 14

COMPARATIVE EXAMPLE

## GaAs MEMS BOLOMETER

# FIG. 15

COMPARATIVE EXAMPLE

| | |
|---|---|
| | GaAs 10nm |
| | n+ $Al_{0.3}Ga_{0.7}As$ 55 nm |
| | $Al_{0.3}Ga_{0.7}As$ 20 nm |
| 2DEG | GaAs 1 $\mu$m |
| | GaAs/$Al_{0.3}Ga_{0.7}As$ (10nm:10nm × 20) |
| | GaAs 100 nm |
| sacrificial layer | $Al_{0.7}Ga_{0.3}As$ 3 $\mu$m |
| | GaAs 200 nm |
| | GaAs sub. |

# FIG.16

# EP 4 517 281 A1

**INTERNATIONAL SEARCH REPORT**

International application No.

**PCT/JP2023/016930**

| A. | CLASSIFICATION OF SUBJECT MATTER |
|---|---|

*G01J 1/02*(2006.01)i; *G01J 3/02*(2006.01)i; *G01J 3/45*(2006.01)i
FI: G01J1/02 R; G01J1/02 C; G01J3/45; G01J3/02 S

According to International Patent Classification (IPC) or to both national classification and IPC

| B. | FIELDS SEARCHED |
|---|---|

Minimum documentation searched (classification system followed by classification symbols)

G01J1/00-G01J4/04; G01J7/00-G01J11/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 7-83756 A (SEMICONDUCTOR RES. FOUND.) 31 March 1995 (1995-03-31) paragraphs [0008], [0009], [0012]-[0024], fig. 1-7 | 1 |
| Y | | 1-12 |
| Y | JP 2018-146294 A (UNIV. OF TOKYO) 20 September 2018 (2018-09-20) paragraphs [0012]-[0028], fig. 1-9 | 1-12 |
| Y | CN 112710402 A (WUHAN UNIVERSITY) 27 April 2021 (2021-04-27) paragraphs [0016], [0066]-[0079] | 1-12 |
| Y | JP 2007-527508 A (QINETIQ LTD.) 27 September 2007 (2007-09-27) paragraphs [0025], [0026], [0033] | 1-12 |
| Y | JP 10-281862 A (YOKOGAWA ELECTRIC CORP.) 23 October 1998 (1998-10-23) paragraph [0050] | 1-12 |
| Y | US 2016/0065169 A1 (NORTHEASTERN UNIVERSITY) 03 March 2016 (2016-03-03) paragraphs [0070], [0081]-[0084], fig. 7 | 1-12 |

| ✓ Further documents are listed in the continuation of Box C. | ✓ See patent family annex. |
|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **30 May 2023** | **20 June 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

20

**INTERNATIONAL SEARCH REPORT**

International application No.

**PCT/JP2023/016930**

C. DOCUMENTS CONSIDERED TO BE RELEVANT

| Category* | Citation of document, with indication, where appropriate, of the relevant passages | Relevant to claim No. |
|---|---|---|
| Y | US 2014/0353506 A1 (SAMSUNG ELECTRONICS CO., LTD.) 04 December 2014 (2014-12-04)<br>paragraphs [0007], [0012], [0049] | 11-12 |

Form PCT/ISA/210 (second sheet) (January 2015)

**INTERNATIONAL SEARCH REPORT**
Information on patent family members

International application No.

**PCT/JP2023/016930**

| Patent document cited in search report | | | Publication date (day/month/year) | Patent family member(s) | | | Publication date (day/month/year) |
|---|---|---|---|---|---|---|---|
| JP | 7-83756 | A | 31 March 1995 | (Family: none) | | | |
| JP | 2018-146294 | A | 20 September 2018 | (Family: none) | | | |
| CN | 112710402 | A | 27 April 2021 | (Family: none) | | | |
| JP | 2007-527508 | A | 27 September 2007 | US paragraphs [0024], [0025], [0032] WO | 2007/0108383 2005/003704 | A1 A1 | |
| JP | 10-281862 | A | 23 October 1998 | (Family: none) | | | |
| US | 2016/0065169 | A1 | 03 March 2016 | WO | 2015/012914 | A2 | |
| US | 2014/0353506 | A1 | 04 December 2014 | KR 10-2014-0045842 | | A | |

## REFERENCES CITED IN THE DESCRIPTION

**Patent documents cited in the description**

- JP 2022087832 A

- JP 2018146294 A

**Non-patent literature cited in the description**

- **Y. ZHANG** ; **S. HOSONO** ; **N. NAGAI** ; **S.H. SONG** ; **K. HIRAKAWA**. Fast and sensitive bolometric terahertz detection at room temperature through thermomechanical transduction. *Journal of Applied Physics*, 2019, vol. 125, 151602, https://doi.org/10.1063/1.5045256

- **X. C. ZHANG** ; **E. B. MYERS** ; **J. E. SADER** ; **M. L. ROUKES**. Nanomechanical Torsional Resonators for Frequency-Shift Infrared Thermal Sensing. *Nano Lett.*, 2013, vol. 13, 1528, https://pubs.acs.org/-doi/pdf/10.1021/n1304687p

- **FROBERGER, K. et al.** SOI-based micro-mechanical terahertz detection device operating at room-temperature. *arXiv preprint arXiv:2204.03970*, 2022, https://arxiv.org/pdf/2204.03970.pdf